# EUROPÄISCHE PATENTSCHRIFT

(11) **EP 2 188 076 B1**
(45) Veröffentlichungstag und Bekanntmachung des Hinweises auf die Patenterteilung: **13.04.2011**
(21) Anmeldenummer: 08758944.6
(22) Anmeldetag: 02.06.2008
(51) Int. Cl.: B21D 26/08

(54) **VORRICHTUNG FÜR DIE ZUFUHR EINES FLUIDS FÜR EXPLOSIONSUMFORMEN**
DEVICE FOR SUPPLYING A FLUID FOR EXPLOSION FORMING
DISPOSITIF D'AMENÉE D'UN FLUIDE POUR LE DÉMOULAGE PAR EXPLOSION

(30) Priorität: 02.08.2007 DE 102007036196
(43) Veröffentlichungstag der Anmeldung: 26.05.2010
(73) Patentinhaber: Cosma Engineering Europe AG, 2522 Oberwaltersdorf (AT)
(72) Erfinder: ZAK, Alexander, A-2340 Mödling (AT); STRANZ, Andreas, A-2651 Reichenau (AT)
(74) Vertreter: Grünecker, Kinkeldey, Stockmair & Schwanhäusser Anwaltssozietät
(86) Internationale Anmeldenummer: PCT/EP2008/004375
(87) Internationale Veröffentlichungsnummer: WO 2009/015716

(56) Entgegenhaltungen:
- WO-A-95/08410
- DE-A1- 2 357 295
- DE-A1-102005 025 660
- US-A- 3 162 087

## Beschreibung

Die Erfindung betrifft eine Vorrichtung für die Zufuhr eines Fluids für Explosionsumformen mit den Merkmalen des Oberbegriffs des Anspruchs 1.

Derartige Vorrichtungen umfassen in der Regel ein Ventil, über welches das Einlassen eines explosiven Gases in ein das Ventil aufnehmendes Element des Explosionsumformwerkzeugs gesteuert wird. Durch Zünden des explosiven Gases in dem Explosionsumformwerkzeug entsteht eine Detonationsfront, welche sich entlang des Werkzeugs ausbreitet. Bei diesem Vorgang wirken große Kräfte auf das Ventil, welche wiederum hohe Anforderungen an die Dichtheit des Ventils stellen. Eine derartige Vorrichtung ist beispielsweise aus der DE 10 2005 025 660 bekannt.

Der Erfindung liegt die Aufgabe zugrunde eine Vorrichtung der eingangs genannten Gattung dahingehend zu verbessern, dass die Vorrichtung bei technisch einfachem Aufbau sowohl ein gutes Befüllen des Werkzeugs mit dem Fluid als auch ein gutes Abdichten während des Explosionsumformprozesses ermöglicht und trotzdem vor den direkten Auswirkungen der Detonation weitgehend geschützt ist.

Diese Aufgabe wird erfindungsgemäß gelöst mit einer Vorrichtung mit den Merkmalen des Anspruchs 1.

Durch die weitgehende mechanische Entkopplung des Betätigungsmechanismus von dem Ventil lässt sich die Masse eines bewegbaren Ventilelements, wie z. B. eines Ventilstößels, klein halten. Es hat sich gezeigt, dass dies ein vorteilhaftes Verhalten sowie eine gute Dichtheit des Ventils während des Explosionsprozesses bewirkt. So lässt sich trotz der dynamisch auftretenden Belastung des Ventils bei der Explosion eine gute Dichtung erzielen. Durch die weitgehende Entkopplung des Ventils von dem Betätigungsmechanismus, wird dieser zugleich vor den während der Explosion wirkenden Kräften geschützt.

In einer vorteilhaften Ausführungsform der Erfindung kann der Betätigungsmechanismus in einem unbetätigten Ventilzustand von dem Ventil beabstandet sein. Dies gewährleistet eine mechanische Entkopplung des Betätigungsmechanismus von dem Ventil.

Vorteilhafterweise kann der Abstand zwischen dem Betätigungsmechanismus und dem Ventil 2 bis 7 mm, vorzugsweise 3 bis 6 mm und insbesondere 4 bis 5 mm betragen. Es hat sich gezeigt, dass dieser Abstandsbereich in der Praxis vorteilhaft ist und eine gute Entkopplung gewährleistet.

In einer Variante der Erfindung kann der Betätigungsmechanismus dem Ventil etwa in Reihe nachgeschaltet angeordnet sein. Diese günstige Anordnung gewährleistet eine gute Kraftübertragung von dem Betätigungsmechanismus auf das Ventil.

In einer vorteilhaften Ausführungsform der Erfindung kann der Betätigungsmechanismus durch ein elastisches Element in einer Ruhestellung gehalten werden, in welcher sich das Ventil in einem unbetätigten Zustand befindet. Dies ermöglicht ein automatisches Schließen des Ventils.

In einer günstigen Variante der Erfindung kann der Betätigungsmechanismus durch Druckbeaufschlagung mit einem Fluid in eine Arbeitsstellung bringbar sein, in welcher sich das Ventil in einem betätigten Zustand befindet. Durch die Druckbeaufschlagung mit dem Fluid, z. B. mittels Hydraulik oder Pneumatik, können große Betätigungskräfte erzielt werden.

In einer weiteren Ausführungsform der Erfindung kann der Betätigungsmechanismus mittels elektrischer Energie in eine Arbeitsstellung bringbar sein, in welcher sich das Ventil in einem betätigten Zustand befindet. Dadurch wird ein sehr breiter Anwendungsbereich erzielt.

Vorteilhafterweise kann das Ventil eine mit Fluid befüllbare Druckkammer mit mindestens zwei Fluidanschlüssen aufweisen. Dadurch kann die Druckkammer schnell befüllt werden.

Die Taktzeiten für einen Explosionsumformvorgang lassen sich so reduzieren. Jedenfalls lassen sich über die Anschlüsse auch unterschiedliche Gase einfüllen, so dass in der Druckkammer ein Fluidgemisch entsteht. Über die getrennten Anschlüsse lassen sich die verschiedenen Gase gut dosieren. Dies ist z. B. insbesondere bei der Verwendung von Knallgas von Vorteil.

In einer günstigen Ausführungsform der Erfindung kann die Druckkammer einen weiteren Anschluss aufweisen, über welchen ein Fluid und/oder ein Messinstrument, insbesondere ein Druckmessinstrument, in die Druckkammer einbringbar ist. So lassen sich die Vorgänge in der Druckkammer überwachen und damit die Sicherheit des Ventils erhöhen.

Insbesondere kann ein Ventilgehäuse des Ventils mehrteilig sein. Dies ermöglicht einen modularen Aufbau und damit eine flexible Produktion des Ventils.

In einer weiteren Ausführungsform der Erfindung kann ein in einem Ventilgehäuse vorgesehener Ventilsitz in einem separaten Segment des Ventilgehäuses vorgesehen sein. Dies ermöglicht die Anpassung des den Ventilsitz beinhaltenden Gehäusesegments an die speziellen thermischen und mechanischen Anforderungen in diesem Bereich.

In einer Variante der Erfindung kann ein Ventilelement bei der Zufuhr des Fluids wenigstens bereichsweise von dem Fluid umströmt sein. Das Fluid kann sich so entlang des Ventilelements ausbreiten. Dies gewährleistet eine gute Fluidzufuhr.

Vorteilhafterweise kann ein Ventilelement Längsnuten aufweisen, welche sich von der Druckkammer in Richtung eines Ventilkopfs des Ventilelements erstrecken. Die Längsnuten sind technisch einfach zu fertigen und gewährleisten eine gute Steuerung sowie Zufuhr des Fluids zu dem Ventilkopf.

Des weiteren kann ein Ventilgehäuse Längsnuten aufweisen, welche sich von der Druckkammer in Richtung eines Ventilkopfs des Ventilelements erstrecken. Dies erlaubt eine gezielte Steuerung des Fluids mit technisch einfachen Mitteln.

Bei einer weiteren Ausführungsform der Erfindung kann ein Ventilkopf eines Ventilelements eine konische Dichtfläche und ausflussseitig einen annähernd zylindrischen Bereich aufweisen und ein entsprechend geformter Ventilsitz vorgesehen sein. Es hat sich gezeigt, dass diese spezielle Form des Ventils gute Dichteigenschaften aufweist, insbesondere bei den beim Explosionsumformen auftretenden hohen Kräften und Drücken.

Günstigerweise kann ein Ventilelement ein einen Ventilkopf aufweisendes Mittelstück und einen Randbereich aufweisen, wobei die axiale Lage des Mittelstücks gegenüber dem Randbereich durch ein Stellmittel einstellbar ist. So lässt sich die axiale Lage und damit die Schließposition des Ventilkopfs gut einstellen.

Alternativ kann das Ventilelement einstückig ausgebildet sein. Dies erhöht die Stabilität des Ventilelements und vereinfacht dessen Fertigung.

In einer Variante der Erfindung kann ein Ventilelement einen Absatz aufweisen, welcher in einem die axiale Bewegung des Ventilelements begrenzenden Bewegungsraum in dem Ventilgehäuse bewegbar ist. So wird die Bewegungsmöglichkeit des Ventilelements mit technisch einfachen Mitteln begrenzt und die Sicherheit des Ventils erhöht.

Des weiteren kann das Ventilelement mittels eines elastischen Elements in eine Position drängbar sein, in welcher sich das Ventil in einem unbetätigten Zustand befindet. Dies ermöglicht ein automatisches Schließen des Ventils.

Vorteilhafterweise kann zwischen dem Ventil und einem das Ventil aufnehmenden Element des Explosionsumformwerkzeugs eine Dichtung aus einem funkenarmen Werkstoff vorgesehen sein. Es hat sich gezeigt, dass ein funkenarmer Werkstoff insbesondere bei den beim Explosionsumformen auftretenden Anforderungen gute Dichteigenschaften gewährleistet.

In einer günstigen Variante der Erfindung kann ein Ventilelement einen funkenarmen Werkstoff aufweisen. Dies gewährleistet gute Dichteigenschaften im Ventilsitz.

Im Folgenden werden zwei Ausführungsbeispiele der Erfindung anhand der folgenden Zeichnung beschrieben. Dabei zeigen:
- Figur 1: eine perspektivische Ansicht eines ersten Ausführungsbeispiels einer erfin- dungsgemäßen Vorrichtung an einem Explosionsumformwerkzeug montiert,
- Figur 2: einen Schnitt durch die erfindungsgemäße Vorrichtung aus Figur 1,
- Figur 3: eine Detailvergrößerung des Ventilkopfs der erfinderischen Vorrichtung.
- Figur 4: zeigt eine Draufsicht auf ein zweites Ausführungsbeispiel der erfindungsge- mäßen Vorrichtung,
- Figur 5: zeigt einen Schnitt durch die erfindungsgemäße Vorrichtung aus Figur 4 ent- lang der Linie B-B,
- Figur 6: zeigt einen Schnitt durch die erfindungsgemäße Vorrichtung entlang der Linie F-F in Figur 5 und
- Figur 7: zeigt einen Schnitt durch die erfindungsgemäße Vorrichtung entlang der Linie D-C in Figur 4.

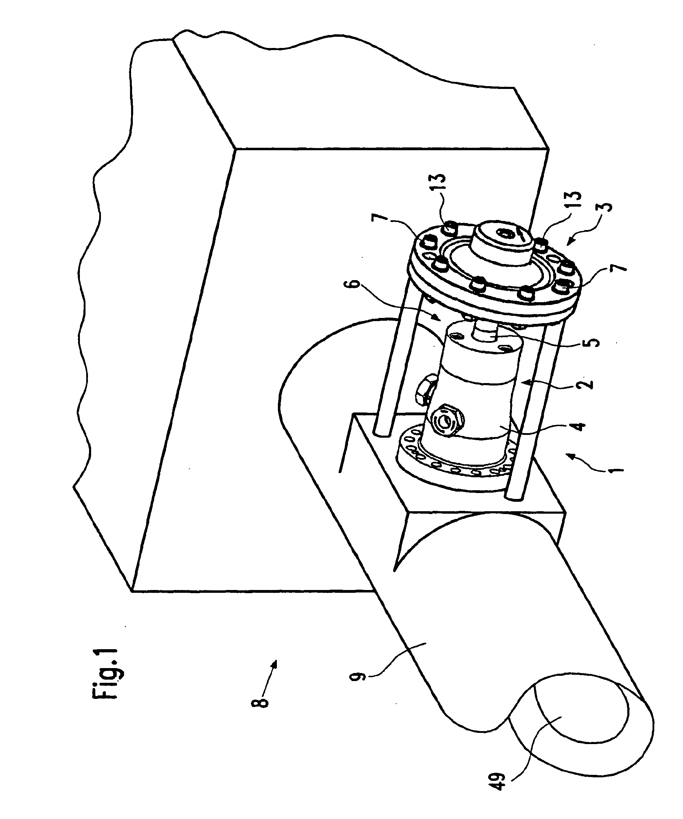

Figur 1 zeigt eine perspektivische Darstellung eines Ausführungsbeispiels der erfindungsgemäßen Vorrichtung 1 für die Zufuhr von Fluid für Explosionsumformen in einem an einem Explosionsumformwerkzeug 8 montierten Zustand.

In Fig. 1 ist die Vorrichtung 1 mittels Schrauben 7 an einem Zündrohr 9 des Explosionsumformwerkzeugs 8 montiert. Das Zündrohr 9 weist in seinem Inneren eine Zündkammer 49 auf, welche über die Vorrichtung 1 mit einem Fluid befüllbar ist. In anderen Ausführungsbeispielen der Erfindung kann die Vorrichtung auch an einer beliebigen anderen Stelle des Explosionsumformwerkzeugs 8 angebracht sein, welche sich für das Befüllen mit einem Fluid eignet.

Die Vorrichtung 1 weist ein Ventil 2 und einen Betätigungsmechanismus 3 auf. Das Ventil 2 weist ein in einem Ventilgehäuse 4 bewegliches Ventilelement, in diesem Fall einen Ventilstößel 5 auf, welcher sich in dem Ventilgehäuse 4 erstreckt und aus dem rückseitigen Ende 6 des Ventilgehäuses 4 ragt.

Der Betätigungsmechanismus 3 ist in Verlängerung des Ventils 2, hinter diesem angeordnet.

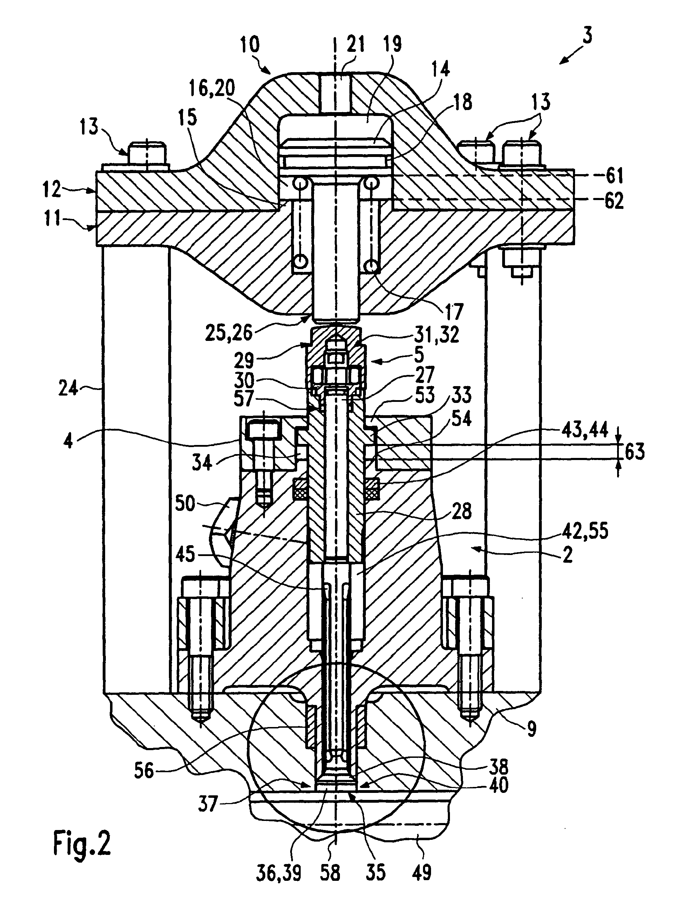

Figur 2 zeigt einen Schnitt durch die an dem Zündrohr 9 montierte Vorrichtung 1. Die in Figur 2 verwendeten Bezugszeichen bezeichnen dieselben Teile wie in Figur 1, so dass diesbezüglich auf die Beschreibung von Figur 1 verwiesen wird. Bei der in Figur 2 gezeigten Vorrichtung 1 befindet sich das Ventil 2 in einem unbetätigten Zustand und der Betätigungsmechanismus 3 in einer Ruhestellung.

Das Ventil 2 der Vorrichtung 1 erstreckt sich in diesem Ausführungsbeispiel wenigstens bereichsweise in das Material des Zündrohrs 9 hinein und ist gegenüber diesem mit einem Dichtelement 56 gedichtet. Das Dichtelement 56 ist hier hülsenartig ausgebildet und aus einem funkenarmen Werkstoff gefertigt. Es ist zwischen dem Ventilgehäuse 4 und dem Zündrohr 9 angeordnet. Alternativ kann das Dichtelement 56 auch eine andere Form aufweisen. Es kann z. B. aus einem oder mehreren hintereinander geschalteten Dichtringen oder Ähnlichem bestehen. Des weiteren kann es in anderen Ausführungsformen der Erfindung auch aus einem anderen Material z. B. aus einem für diese Anforderung geeigneten Stahl oder einer anderen Legierung bestehen.

Der Betätigungsmechanismus 3 der Vorrichtung 1 weist ein mehrteiliges Gehäuse 10 und ein Betätigungselement, in diesem Fall einen Kolben 14 auf. In diesem Ausführungsbeispiel besteht das Gehäuse 10 aus einem Boden 11 und einem Deckel 12. Der Boden 11 weist einen Zentrierabsatz 15 zum Zentrieren der beiden Gehäuseteile 11 und 12 zueinander auf und ist mit dem Deckel 12 mittels Schrauben 13 verbunden. Im Innern des Betätigungsmechanismus 3 ist eine Ausnehmung 16 vorgesehen, in welcher der Kolben 14 axial beweglich angeordnet ist. Die Bewegung des Kolbens 14 wird durch den Zentrierabsatz 15 des Bodens 11 und durch den Deckel 12 begrenzt.

Der Kolben 14 ist über ein elastisches Element 17, in Richtung des Deckels 12 vorgespannt. Auf dem Kolben 14 ist ein Dichtmittel 18 angeordnet. Das Dichtmittel 18 unterteilt die Ausnehmung 16 in eine obere Kammer 19 und eine untere Kammer 20. Die obere Kammer 19 ist über einen Fluidanschluss 21 mit einem Fluid, das heißt einem Gas oder einer Flüssigkeit, befüllbar. In diesem Ausführungsbeispiel ist der Fluidanschluss 21 als Druckanschluss ausgebildet und an ein Hydrauliksystem angeschlossen.

Der Betätigungsmechanismus 3 ist hinter dem Ventil 2 angeordnet. Der Kolben 14 ragt mit seinem unteren Ende 25 durch eine Öffnung 26 im Boden 11 des Betätigungsmechanismus 3 und ist etwa in axialer Verlängerung des Ventils 2, insbesondere des Ventilstößels 5, in Reihe hinter diesem angeordnet. Er ist dabei etwa 2 bis 7 mm, vorzugsweise 3 bis 6 mm und insbesondere 4 bis 5 mm vom dem Ventil 4 bzw. dem Ventilstößel 5 beanstandet. In anderen Ausführungsbeispielen der Erfindung kann der Kolben 14 den Ventilstößel 5 jedoch auch leicht berühren. Auch Zwischenelemente, wie z. B. eine Feder, welche zwischen dem Kolben 14 und dem Ventilstößel 5 angeordnet sind, sind denkbar.

Der Ventilstößel 5 ist aus mehreren Teilen aufgebaut und besteht in diesem Ausführungsbeispiel aus drei Elementen, einem Mittelstück 27, einem Wandbereich 28 und einer Kappe 29. Das Mittelstück 27 ist an seinem hinteren, dem Betätigungsmechanismus 3 zugewandten Ende 31 mit einem Gewinde 32 versehen. Es erstreckt sich durch den Randbereich 28 hindurch und ist in diesem über eine Mutter 30 fixiert. Zwischen dem Randbereich 28 und dem Mittelstück 27 ist ein Dichtmittel 57, hier ein Dichtring 57, vorgesehen. Dieser dichtet die Schnittstelle zwischen den beiden Elementen 27 und 28 des Ventilstößels 5 gegen Fluidaustritt. Das Dichtmittel 57 ist über die Mutter 30 vorspannbar. In einem weiteren Ausführungsbeispiel der Erfindung kann die Mutter 30 auch gleichzeitig als Stellmittel dienen, über welche die axiale Lage des Mittelstücks 27 gegenüber dem Randbereich 28 einstellbar ist. Die Kappe 29 ist ebenfalls auf dem Gewinde 32 aufgeschraubt. Sie dient dem Schutz des darunter liegenden Verstellmechanismus mit der Mutter 30 und bildet den betätigungsmechanismusseitigen Abschluss des Ventilstößel 5.

Der Randbereich 28 des Ventilstößels 5 weist einen Absatz 33 auf, welcher mit einem Bewegungsraum 34 in dem Ventilgehäuse 4 in Eingriff steht. Durch die Wandungen 53, 54 des Bewegungsraums 34 ist die Bewegung des Ventilstößels 5 in axialer Richtung begrenzt. Der Bewegungsraum 34 definiert zusammen mit dem Ventilstößel 5 und dem unten beschriebenen Ventilsitz 37 den Ventilhub 63.

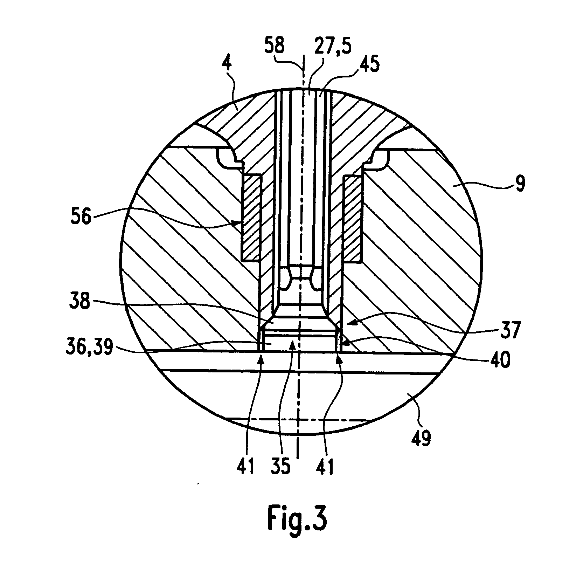

Das Mittelstück 27 weist an seinem vorderen, zündrohrseitigen Ende 35 einen Ventilkopf 36 auf, welcher gegen einen Ventilsitz 37 dichtet. Der Ventilkopf 36 und der Ventilsitz 37 sind etwa korrespondierend geformt. Der Ventilsitz 37 ist hier etwa kegelsitzartig ausgebildet und der Ventilkopf 36 weist eine konische Dichtfläche 38 auf. Ausflussseitig, das heißt auf seiner der Zündkammer 49 zugewandten Seite, weist der Ventilkopf 36 einen etwa zylindrischen Bereich 39 auf, welcher etwa konzentrisch in einen entsprechend geformten Bereich 40 des Kegelsitzes 37 angeordnet ist. Der zylindrische Bereich 39 des Ventilkopfs 36 und der zylindrische Bereich 40 des Ventilsitzes 37 sind voneinander beanstandet und bilden bei unbetätigtem Ventil einen Ringspalt 41 aus. Dieser ist vergrößert in Figur 3 dargestellt.

Der Ventilstößel 5 weist wenigstens bereichsweise einen funkenarmen Werkstoff auf. In diesem Ausführungsbeispiel ist das Mittelstück 27 des Ventilstößels 5 aus einem funkenarmen Werkstoff gefertigt. Je nach Anwendungsfall können alternativ auch nur bestimmte Bereiche des Ventilstößels wie z. B. der Ventilkopf 36 oder die Dichtfläche 38 diese Legierung aufweisen.

Das Ventilgehäuse 4 weist eine Druckkammer 42 auf, welche in diesem Ausführungsbeispiel durch die Öffnung 55 in dem Ventilgehäuse 4 und den Randbereich 28 sowie das Mittelstück 27 gebildet wird. Das Gehäuse 4 weist wenigstens ein Dichtmittel 43 auf, welches das Gehäuse 4 gegenüber dem Randbereich 28 des Ventilstößel 5 dichtet. In diesem Ausführungsbeispiel ist das Dichtmittel 43 in Form von zwei Dichtringen 44 vorgesehen. Zusammen mit dem Ventilkopf 36 und dem Ventilsitz 37 dichten diese die Druckkammer 42 gegen Fluidaustritt.

Die Druckkammer 42 weist wenigstens einen Fluidanschluss 50 auf, über welchen sie mit einem Fluid, z. B. einem explosiven Gas oder Gasgemisch, befüllbar ist. Die Druckkammer 42 des hier betrachteten Ausführungsbeispiels weist zwei Fluidanschlüsse 50, 51 auf, einen für Sauerstoff (O₂) und einen für Wasserstoff (H₂).

Das Mittelstück 27 des Ventilstößels 5 weist Längsnuten 45 auf, welche sich von der Druckkammer 42 in Richtung des Ventilkopfs 36 erstrecken. Die Längsnuten 45 erstrecken sich in diesem Ausführungsbeispiel durchgehend und etwa axial entlang dem Mittelstück 27. In anderen Ausführungsbeispielen der Erfindung kann der Verlauf und die Form der Nuten 45 jedoch variieren. So können die Nuten 45 z. B. auch in einer leichten Spiralform verlaufen oder unterbrochen sein, usw. Alternativ können die Längsnuten 45 auch durch entsprechende Bohrungen in dem Mittelstück 27 ersetzt werden.

Figur 3 zeigt eine Detailvergrößerung des Ventilkopfs 36 der erfindungsgemäßen Vorrichtung 1. Die in Figur 3 verwendeten Bezugszeichen bezeichnen dieselben Teile wie in den Figuren 1 und 2, so dass diesbezüglich auf die Beschreibung der Figuren 1 und 2 verwiesen wird.

In Figur 3 sind die spezielle Form des Ventilkopfes 36 und der korrespondierend geformte Ventilsitz 37 gut erkennbar. Auch der etwa parallele Verlauf der beiden zylindrischen Bereiche 39 und 40 ist hier gut zu sehen. In der Vergrößerung ist erkennbar, dass der Ventilsitz 37 in diesem Ausführungsbeispiel der Erfindung mehrteilig ist. Der konische Bereich des Ventilsitzes 37 ist hier in dem Ventilgehäuse 4 angeordnet während der zylindrische Bereich 40 des Ventilsitzes 37 in dem Zündrohr 9 ausgebildet ist.

In dem hier beschriebenen Ausführungsbeispiel der Erfindung ist das bewegliche Ventilelement 5 ein Ventilstößel und das Betätigungselement 14 ein Kolben. Dies muss jedoch nicht zwangsläufig der Fall sein. In anderen Ausführungsbeispielen der Erfindung kann die Ausgestaltung dieser Elemente 5, 14 auch von der hier beschriebenen abweichen. So kann z. B. auch eine Membran, eine Kugel oder Ähnliches als Ventilelement 5 und/oder als Betätigungselement 14 vorgesehen sein.

Im Folgenden wird die Funktionsweise des in den Figuren 1 bis 3 dargestellten erfindungsgemäßen Ausführungsbeispiels erläutert.

In dem in Figur 2 dargestellten unbetätigten Ventilzustand ist der Betätigungsmechanismus 3 der Vorrichtung 1 separat zu dem Ventil 2 angeordnet. Er befindet sich in seiner Ruhestellung 61 und ist von dem Ventil 2 weitgehend entkoppelt. In dem hier betrachteten Ausführungsbeispiel der Erfindung ist der Betätigungsmechanismus 3 bzw. der Kolben 14 von dem Ventil 2 bzw. dem Ventilstößel 5 beabstandet. In diesem Zustand dichtet der Ventilkopf 36 in dem Kegelsitz 37. Ein Fluid- z. B. ein Gasaustausch zwischen der Druckkammer 42 und der Zündkammer 49 in dem Zündrohr 9 ist unterbrochen.

An die Fluidanschlüsse 50, 51 der Druckkammer 42 werden entsprechende Fluidleitungen angeschlossen. In diesem Ausführungsbeispiel wird über den Fluidanschluss 50 Wasserstoff (H₂) und über den Fluidanschluss 51 Sauerstoff (O₂) in einem bestimmten Verhältnis eingeleitet. In der Druckkammer 42 entsteht dadurch ein explosives Gasgemisch, Knallgas.

Alternativ kann das Knallgas jedoch auch erst in dem Werkzeug erzeugt werden. Hierfür wird über den Fluidanschluss 50 zunächst Wasserstoff (H₂) eingeleitet und über das Ventil dosiert in das Zündrohr 9 abgegeben, wie im Folgenden beschrieben. Anschließend wird über den Fluidanschluss 51 Sauerstoff (O₂) in die Druckkammer geleitet und ebenfalls dosiert in das Werkzeug abgegeben. Dadurch bildet sich in dem Zündrohr 9 Knallgas.

Je nach Anwendungsfall kann das Befüllen des Ventils mit den unterschiedlichen Gasen wie oben beschrieben nacheinander oder aber gleichzeitig erfolgen. Durch das gleichzeitige Einleiten des Gases oder Gasgemisches durch mehrere Fluidanschlüsse 50, 51 kann der Befüllvorgang und damit die Rüstzeit des Werkzeugs verkürzt werden. Durch das gleichzeitige Einleiten unterschiedlicher Gase wie z. B. H₂ und O₂ durch unterschiedliche Fluidanschlüsse 50, 51 lässt sich ein Gasgemisch, wie z. B. Knallgas, in dem Ventil erzeugen, welches dann dosiert in das Werkstück abgegeben werden kann.

Entsprechend dem Anwendungsfall können die Druckanschlüsse 50, 51 unterschiedlich genutzt werden. Es ist ebenfalls möglich mehrere Gase über einen Druckanschluss in das Ventil einzuleiten. So können in dem vorliegenden Ausführungsbeispiel z. B.beide Gase H₂ und O₂ oder ein vorbereitetes Knallgasgemisch über den Fluidanschluss 50 oder den Fluidanschluss 51 eingeleitet werden. Über den zweiten Fluidanschluss 51 kann dann z. B. ein Schutzgas, wie Argon, Stickstoff etc., oder eine Flüssigkeit wie z. B. Wasser eingeleitet werden. So kann das bei der Handhabung von Wasserstoff (H₂) bestehende Gefahrenpotential für die Umgebung reduziert werden.

Um das Ventil 2 zu betätigen und eine Fluidverbindung zwischen der Druckkammer 42 und der Zündkammer 49 herzustellen, wird der Kolben 14 des Betätigungsmechanismus 3 über den Fluidanschluss 21 in dem Deckel 12 mit Druck beaufschlagt. Dafür wird ein Fluid, in diesem Ausführungsbeispiel Hydrauliköl, in die obere Kammer 19 eingeleitet. Durch den sich in der oberen Kammer 19 aufbauenden Druck wird der Kolben 14 entgegen der Federkraft des elastischen Elements17 in Richtung des Ventils 2 in eine Arbeitsstellung 62 gedrängt. Dadurch kommt das untere Ende 25 des Kolbens 14 mit dem Ventil 2 in Kontakt und betätigt dieses.

Während des Betätigungsvorgangs wird der Ventilstößel 5 durch den Kolben 14 in Richtung des Zündrohrs 9 gedrängt. Der Absatz 33 des Randbereichs 28 wird in dem Bewegungsraum 34 axial bewegt bis er die Wandung 54 des Bewegungsraums 34 berührt. Gleichzeitig wird der Ventilkopf 36 zu dem Ventilsitz 37 beabstandet. Nun befindet sich das Ventil 2 in einem geöffneten Zustand und die Druckkammer 42 steht in Fluidverbindung mit der Zündkammer 49 des Zündrohrs 9. Je nach den herrschenden Druckverhältnissen in der Druckkammer 42 und der Zündkammer 49 strömt nun Knallgas in die Zündkammer 49 und reichert sich in dieser an. Dabei umspült das Knallgas den Ventilstößel 5. Es strömt entlang des Mittelstücks 27 des Ventilstößels 5 in Richtung des Ventilkopfs 36. Der Gasfluss wird dabei durch die Längsnuten 45 gelenkt.

Wird der Fluidanschluss 21 im Deckel 12 des Betätigungsmechanismus 3 entlastet, das heißt, verringert sich der Fluiddruck in der oberen Kammer 19, wird der Kolben 14 durch die Federkraft des elastischen Elements 17 wieder in seine Ruhestellung 61, in Richtung des Fluidanschlusses 21, gedrängt. Durch den Fluiddruck in der Kammer 42, 5 wird der Ventilstößel 5 in Richtung des Betätigungsmechanismus 3 und das Ventil 2 damit in einen unbetätigten bzw. geschlossenen Zustand gedrängt. Mit dem Ventilstößel 5 bewegt sich auch der Absatz 33 in dem Bewegungsraum 34 in Richtung des Betätigungsmechanismus 3. Noch bevor der Absatz 33 die Wandung 53 des Bewegungsraums 34 berührt kommt der Ventilkopf 36 an der konischen Fläche des Ventilsitzes 37 zur Anlage und schließt so das Ventil 2. Dadurch wird die Fluidverbindung der Druckkammer 42 mit der Zündkammer 49 unterbrochen. Das Ventil 2 befindet sich nun wieder in einem unbetätigten Zustand.

Während dieses Schließvorgangs, das heißt während sich der Kolben 14 und der Ventilstößel 5 bewegen, findet eine mechanische Entkopplung des Betätigungsmechanismus 3 und des Ventils 2 statt. Der Zeitpunkt der Entkopplung ist von mehreren Faktoren, insbesondere von den Druckverhältnissen in der oberen Kammer 19, der Druckkammer 42, der Zündkammer 49 und der Federkraft des elastischen Elements 17 abhängig.

Sollte der Schließzeitpunkt oder der Hub 63 des Ventils 2 nicht stimmen, kann er über die Mutter 30 eingestellt werden. Durch Öffnen der Kappe 29 und Drehen der Mutter 30 im oder entgegen dem Uhrzeigersinn lässt sich die axiale Lage des Mittelstücks 27 gegenüber dem Randbereich 28 einstellen. Der Ventilstößel 5 lässt sich somit verlängern bzw. verkürzen.

Nachdem das Zündrohr 9 das Explosionsumformwerkzeug 8 wie oben beschrieben mit dem explosiven Gasgemisch, hier Knallgas, befüllt wurde, kann dieses gezündet werden. Bei der Explosion des Knallgases erhöht sich das Volumen des Gases und damit der Druck im Inneren des Zündrohrs 9 schlagartig. Es entsteht eine Detonationsfront, welche sich in diesem Ausführungsbeispiel mit hoher Geschwindigkeit entlang der Zündkammer 49 im Inneren des Zündrohrs 8 bewegt. Durch die spezielle Form des Ventilkopfs 36 und die geringe Masse des Ventilstößels 5 wird das Ventil 2 bei der schlagartig auftretenden Druckbelastung im Zündrohr 9 in einen unbetätigten, also geschlossenen Zustand gedrängt. Die geringe Masse des Ventilstößels 5 begünstigt dabei eine schnelle Reaktion des Ventils auf die dynamische Belastung und die spezielle Form des Ventilkopfs 36 und/oder des Ventilsitzes 37 gewährleistet eine gute Dichtung selbst bei schlagartig auftretenden, hohen Druckschwankungen.

Die Sicherheit des Ventils während der Explosion kann weiter erhöht werden, indem die Druckkammer 42 nach dem Einleiten des explosiven Gases oder Gasgemisches in das Zündrohr 9 mit einem nicht explosiven Fluid wie z. B. einem Schutzgas oder einer Flüssigkeit wie z. B. Wasser gefüllt wird. Das Schutzgas kann über einen oder beide Fluidanschlüsse 50, 51 in die Druckkammer 42 des Ventils geleitet werden, wodurch der Ventilstößel 5 in Richtung des Betätigungsmechanismus 3 und das Ventil somit in einen unbetätigten Zustand gedrängt wird.

Obwohl der unbetätigte Ventilzustand in diesem Ausführungsbeispiel der Erfindung einem geschlossenen Ventilzustand entspricht, kann es sich in anderen Ausführungsformen der Erfindung, je nach Anwendungsfall, auch anders z. B. genau umgekehrt verhalten. So kann z. B. der unbetätigte Ventilzustand auch einem geöffneten Ventil entsprechen.

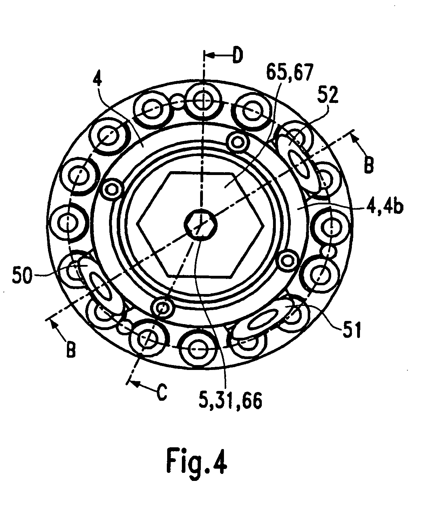

Die Figuren 4 bis 7 zeigen ein zweites Ausführungsbeispiel der erfindungsgemäßen Vorrichtung 1 für die Zufuhr von Fluid für Explosionsumformen.

Der Aufbau des zweiten Ausführungsbeispiels ähnelt dem des ersten Ausführungsbeispiels. Deshalb wird im Folgenden lediglich auf die Unterschiede der beiden Ausführungsbeispiele eingegangen. Sofern es sich um die gleichen oder in ihrer Funktion gleichartige Bauteile handelt finden in den Figuren 4 bis 8 des zweiten Ausführungsbeispiels die gleichen Bezugszeichen wie in den Figuren 1 bis 3 des ersten Ausführungsbeispiels Verwendung, so dass diesbezüglich auf die Beschreibung der Figuren 1 bis 3 verwiesen wird.

In den Figuren 4 bis 7 wurde der Betätigungsmechanismus 3 aus Gründen der Übersichtlichkeit weggelassen. Er ist auch in diesem Ausführungsbeispiel analog dem ersten Ausführungsbeispiel hinter dem Ventil 2 der Vorrichtung 1 angeordnet, wie z. B. in Figur 2 des ersten Ausführungsbeispiels gezeigt. Alternativ zu der in dem ersten Ausführungsbeispiel gezeigten mit einem Fluid betriebenen Form kann der Betätigungsmechanismus 3 auch elektrisch betrieben werden. In der elektrisch betriebenen Form kann z. B. statt dem Fluidanschluss 21 ein Elektromagnet vorgesehen sein, der mit einem magnetischen Betätigungselement 14 in Wechselwirkung tritt.

Figur 4 zeigt eine Draufsicht auf das Ventil 2 des zweiten Ausführungsbeispiels der Erfindung. Durch den fehlenden Betätigungsmechanismus 3 ist der Blick auf das rückseitige Ende 6 des Ventilgehäuses 4 sowie hintere Ende 31 des Ventilselements 5 frei. Auch in diesem Ausführungsbeispiel der Erfindung ist das Ventilelement 5 in Form eines Ventilstößels ausgebildet.

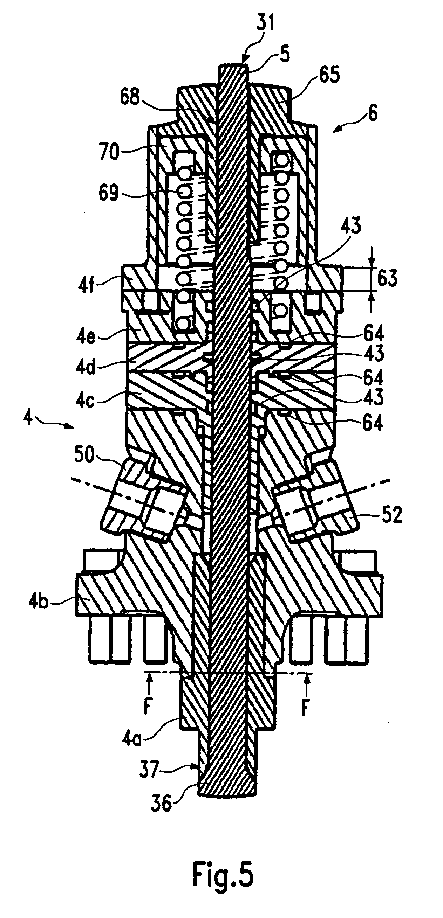

In der Draufsicht ist gut zu sehen, dass das Ventil 2 des zweiten Ausführungsbeispiels der Erfindung 3 Anschlüsse 50, 51, 52 aufweist, welche mit der Druckkammer 42 im Innern des Ventils 2 in Verbindung stehen, wie in Figur 5 gezeigt. Die ersten beiden Anschlüsse 50, 51 werden analog dem ersten Ausführungsbeispiel als Fluidanschlüsse genutzt, während über den dritten Anschluss 52 ein Messinstrument z. B. für die Innendruckmessung in der Druckkammer 42 eingebracht werden kann.

Alternativ kann der Anschluss 52 ebenfalls als Fluidanschluss ausgebildet sein, um so entweder ein schnelleres Befüllen der Druckkammer 42 oder die Zufuhr eines dritten Fluids wie z. B. eines Inert-Gases zu ermöglichen. In anderen Ausführungsbeispielen der Erfindung können daher auch mehr als drei derartige Anschlüsse an dem Ventil 2 vorgesehen sein, welche Zugang zu der Druckkammer 42 erlauben.

Figur 5 zeigt einen Schnitt durch das Ventil 2 des zweiten Ausführungsbeispiels der Erfindung entlang der Schnittlinie B-B in Figur 4.

Auch hier ist das Ventilgehäuse 4 analog dem ersten Ausführungsbeispiel mehrteilig. Es weist einzelne Segmente 4a bis 4f auf. Zwischen den einzelnen Segmenten 4b bis 4e des Ventilgehäuses sind Dichtungen 64 vorgesehen, welche die einzelnen Segmente 4b bis 4e gegeneinander abdichten. In diesem Ausführungsbeispiel sind einzelne Segmente 4c bis 4e des Ventilsgehäuses 4 auch gegenüber dem Ventilelement 5 gedichtet. Die Segmente 4b bis 4e sind über Dichtmittel 43 gegenüber dem Ventilelement 5 gedichtet und das Ventilsegment 4a ist mittels des Ventilsitzes 37 gegenüber dem Ventilelement 5 gedichtet. Dies erhöht die Sicherheit gegen Leckage. In anderen Ausführungsbeispielen der Erfindung können allerdings auch entsprechend weniger Dichtungen 43 vorgesehen sein. So muss nicht zwangsläufig jedes Einzelelement 4a bis 4e gegenüber dem Ventilelement 5 gedichtet sein.

Die Druckkammer 42, durch welche sich das Ventilelement 5 erstreckt, ist in diesem zweiten Ausführungsbeispiel in dem Ventilgehäuse 4 ausgebildet. Das heißt, sie wird im Gegensatz zu dem ersten Ausführungsbeispiel lediglich durch nicht bewegliche Segmente 4a - c des Ventilgehäuses 4 gebildet.

Das Ventilelement 5 ist in diesem Ausführungsbeipiel weitgehend einteilig ausgebildet. Lediglich an seinem hinteren Ende 31 ist ein Flansch 65 auf das Ventilelement 5 aufgebracht. In diesem Fall weisen sowohl das Ventilelement 5 als auch der Flansch 65 eine Schlüsselweite 66 und 67 auf und sind über ein Gewinde 68 direkt miteinander verschraubt. Alternativ kann der Flansch 65 jedoch auch auf andere, dem Fachmann bekannte Weise mit dem Ventilelement 5 verbunden sein, z. B. durch Verschrauben mittels separater Schrauben oder ähnlichem.

Über den Flansch 65 und ein in dem Ventilgehäuse 4 vorgesehenes elastisches Element 69 wird das Ventil 2 geschlossen gehalten. Das heißt, der Ventilkopf 36 des Ventilselements 5 wird über die Federkraft des elastischen Elements 69 in Kontakt mit dem Ventilsitz 37 des Ventilgehäuses 4 gehalten. In diesem Fall ist das elastische Element 69 eine Torsionsfeder, welche über eine Distanzhülse 70 zwischen dem Ventilgehäuse 4 und dem Flansch 65 angeordnet ist. Die Distanzhülse 70 begrenzt dabei den Federweg und damit die Bewegung des Flansches 65 und des Ventilelements 5.

Der Ventilsitz 37 ist in diesem Ausführungsbeispiel der Erfindung in einem separaten Segmet 4a des Ventilgehäuses 4 ausgebildet. So kann der Ventilsitz 37 bzw. das gesamte Segment 4a speziell den Anforderungen in diesem thermisch und mechanisch beanspruchten Bereich angepasst werden und beispielsweise aus einem anderen Material als das restliche Ventilgehäuse 4 gefertigt werden, z. B. aus einem funkenarmen Werkstoff. Des weiteren lässt sich dieses Segment 4a des Ventilgehäuses 4 bei eventuell auftretender Beschädigung so leicht ersetzen, ohne das gesamte Ventilgehäuse austauschen zu müssen.

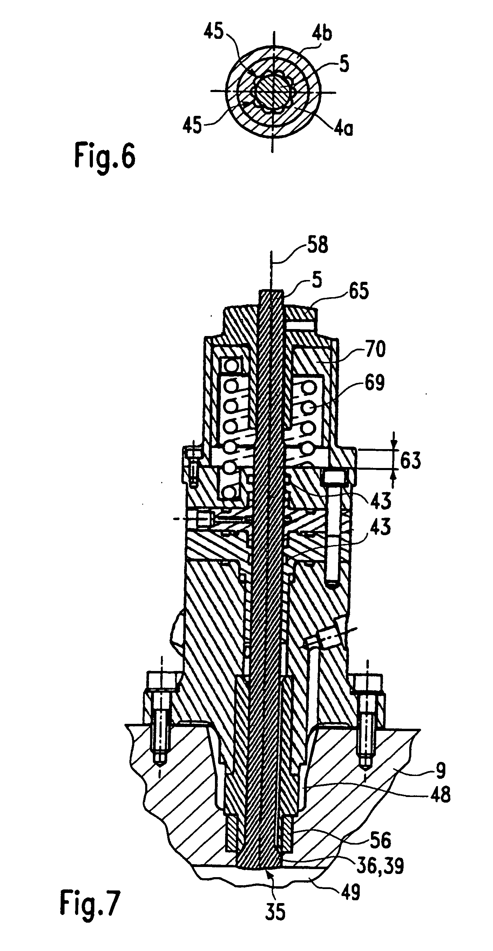

Die Längsnuten 45, welche sich von der Druckkammer 42 in Richtung des Ventilkopfs 36 erstrecken sind bei diesem Ausführungsbeispiel der Erfindung nicht wie in dem ersten Ausführungsbeispiel in dem Ventilelement 5 sondern in dem es umgebenden Ventilgehäuse 4 angeordnet, wie in Figur 6 zu sehen.

Figur 6 zeigt einen Schnitt durch das Ventilgehäuse 4 im Bereich des Segments 4a entlang der Schnittlinie F-F in Figur 5. Hier ist zu sehen, dass die Oberfläche des Ventilstößels 5 weitgehend glatt ist, während die Längsnuten 45 in dem Segment 4a des Ventilgehäuses 4 ausgebildet sind. Alternativ zu dem ersten und zweiten Ausführungsbeispiel der Erfindung können die Längsnuten oder Teile davon auch in beiden Bauteilen, das heißt, in dem Ventilelement 5 und dem Ventilgehäuse 4 vorgesehen sein. Alternativ können das Ventilelement 5 und das Ventilgehäuse 4 auch beliebige andere Konturen aufweisen, deren Zusammenspiel Kanäle ergibt, welche dazu geeignet sind Fluid aus der Druckkammer 42 in Richtung des Ventilkopfs 36 zu leiten.

Figur 7 zeigt einen Schnitt durch das Ventil 2 des zweiten Ausführungsbeispiels der Erfindung entlang der Schnittlinie D-C in Figur 4 in einem an dem Zündrohr 9 montierten Zustand.

Hier ist zu sehen, dass auch das Ventil 2 gemäß dem zweiten Ausführungsbeispiel der Erfindung mit einer Dichtung 56, welche bevorzugt aus einem funkenarmen Werkstoff besteht, in dem Zündrohr 9 oder einem entsprechenden Teil des Umformwerkzeugs 8 angeordnet ist.

Im Folgenden wird die Funktionsweise des in den Figuren 4 bis 7 dargestellten zweiten Ausführungsbeispiels der Erfindung erläutert. Diese ist der Funktionsweise des ersten Ausführungsbeispiels der Erfindung sehr ähnlich. Daher wird hier nur auf die Unterschiede in der Funktionsweise eingegangen.

Die beiden Fluidanschlüsse 50, 51 werden analog dem ersten Ausführungsbeispiel genutzt. Über den dritten Anschluss 52 wird in dem zweiten Ausführungsbeispiel der Erfindung ein Innendruckmessinstrument in die Druckkammer 42 eingebracht. Mit diesem können zu bestimmten, kritischen Zeitpunkten z. B. beim Befüllen der Druckkammer 42 oder während der Explosion Messwerte bestimmt werden, um einer Überlastung des Ventils entgegenwirken zu können. Alternativ können auch permanent Messwerte generiert werden und so der Druckverlauf während eines Umformzyklus aufgezeichnet werden.

Auch in dem zweiten Ausführungsbeispiel der Erfindung ist der Betätigungsmechanismus 3 analog dem ersten Ausführungsbeispiel separat zu dem Ventil 2 angeordnet. Er kommt erst durch elektrische, pneumatische oder hydraulische Betätigung mit dem Ventilelement 5 in Kontakt und bewegt dieses entgegen der Kraft des elastischen Elements 69 in einen betätigten, das heißt geöffneten Ventilzustand. In diesem Zustand ist der Ventilkopf 36 von dem Ventilsitz 37 beabstandet. So kann Fluid aus der Druckkammer 42 entlang des Ventilelements 5 und der Längsnuten 45 in das Explosionsumformwerkzeug 8, genauer gesagt in die Zündkammer 49 des Zündrohrs 9 gelangen.

Die Bewegung des Ventilelements 5 in den geöffneten Ventilzustand wird dabei durch die Distanzhülse 70 begrenzt. Diese wird über den an dem Ventilelement 5 angebrachten Flansch 65 mit dem Ventilelement 5 mitbewegt und definiert so den Hub 63 des Ventils 2. Durch Einbau von in ihrer Form und ihren Abmessungen unterschiedlichen Distanzhülsen lässt sich der Ventilhub 63 einfach und schnell einstellen.

Der Ventilhub 63 ist zudem bis zu einem gewissen Grad über die Positionierung des Flansches 65 auf dem Ventilelement 5 einstellbar. Ist, wie hier, eine direkte Verschraubung der beiden Teile miteinander vorgesehen, lässt sich der Ventilhub 63, bei dem bereits fertig montierten Ventil durch einfaches Verdrehen des Flansches 65 gegenüber dem Ventilelement 5 anpassen, ohne das Ventil abbauen oder demontieren zu müssen. Über diesen Mechanismus lässt sich auch die Vorspannung des elastischen Elements 69 und damit die Schließkraft des Ventils 2 auf einfache Weise regulieren.

Ist der Befüllvorgang des Zündrohrs 9 mit dem explosiven Fluid bzw. Fluidgemisch abgeschlossen, wird der Betätigungsmechanismus 3 ebenfalls elektrisch, pneumatisch oder hydraulisch in seine Ruhestellulng 61 zurückversetzt und das Ventilelement 5 entlastet. Durch die Federkraft des elastischen Elements 69 wird das Ventilelement 5 in einen geschlossenen unbetätigten Ventilzustand gedrängt. In diesem Zustand dichtet der Ventilkopf 36 auch den Ventilsitz 37 und unterbricht so die Fluidverbindung der Zündkammer 49 mit der Druckkammer 42.

## Patentansprüche

1. Vorrichtung (1) für die Zufuhr von Fluid für Explosionsumformen, welche ein Ventil (2) und einen Betätigungsmechanismus (3) zum Betätigen des Ventils (2) aufweist,
**dadurch gekennzeichnet,**
**dass** der Betätigungsmechanismus (3) in einem unbetätigten Ventilzustand von dem Ventil (2) weitgehend mechanisch entkoppelt vorgesehen ist.

2. Vorrichtung (1) nach Anspruch 1,
**dadurch gekennzeichnet,**
**dass** der Betätigungsmechanismus (3) in einem unbetätigten Ventilzustand von dem Ventil (2) beabstandet ist, insbesondere, dass der Abstand zwischen dem Betätigungsmechanismus (3) und dem Ventil (2) 2 bis 7 mm, vorzugsweise 3 bis 6 mm und insbesondere 4 bis 5 mm beträgt.

3. Vorrichtung (1) nach wenigstens einem der vorhergehenden Ansprüche,
**dadurch gekennzeichnet,**
**dass** der Betätigungsmechanismus (3) dem Ventil (2) etwa in Reihe nachgeschaltet angeordnet ist.

4. Vorrichtung (1) nach wenigstens einem der vorhergehenden Ansprüche,
**dadurch gekennzeichnet,**
**dass** der Betätigungsmechanismus (3) durch ein elastisches Element (17) in einer Ruhestellung (61) gehalten wird, in welcher sich das Ventil (2) in einem unbetätigten Zustand befindet.

5. Vorrichtung (1) nach wenigstens einem der vorhergehenden Ansprüche,
**dadurch gekennzeichnet,**
**dass** der Betätigungsmechanismus (3) mittels elektrischer Energie oder durch Druckbeaufschlagung mit einem Fluid in eine Arbeitsstellung (62) bringbar ist, in welcher sich das Ventil (2) in einem betätigten Zustand befindet.

6. Vorrichtung (1) nach wenigstens einem der vorhergehenden Ansprüche,
**dadurch gekennzeichnet,**
**dass** das Ventil (2) eine mit Fluid befüllbare Druckkammer (42) mit mindestens zwei Fluidanschlüssen (50, 51) aufweist.

7. Vorrichtung (1) nach wenigstens einem der vorhergehenden Ansprüche,
**dadurch gekennzeichnet,**
**dass** die Druckkammer (42) einen weiteren Anschluss (52) aufweist, über welchen ein Fluid und/oder ein Messinstrument insbesondere ein Druckmessinstrument, in die Druckkammer (42) einbringbar ist.

8. Vorrichtung (1) nach wenigstens einem der vorhergehenden Ansprüche,
**dadurch gekennzeichnet,**
**dass** ein Ventilgehäuse (4) des Ventils (2) mehrteilig ist.

9. Vorrichtung (1) nach wenigstens einem der vorhergehenden Ansprüche,
**dadurch gekennzeichnet,**
**dass** ein in dem Ventilgehäuse (4) vorgesehener Ventilsitz (37) in einem separaten Segment (4a) des Ventilgehäuses (4) vorgesehen ist.

10. Vorrichtung (1) nach wenigstens einem der vorhergehenden Ansprüche,
**dadurch gekennzeichnet,**
**dass** ein Ventilelement (5) bei der Zufuhr des Fluids wenigstens bereichsweise von dem Fluid umströmt ist.

11. Vorrichtung (1) nach wenigstens einem der vorhergehenden Ansprüche,
**dadurch gekennzeichnet,**
**dass** ein Ventilelement (5) Längsnuten (45) aufweist, welche sich von der Druckkammer (42) in Richtung eines Ventilkopfs (36) des Ventilstößels (5) erstrecken.

12. Vorrichtung (1) nach wenigstens einem der vorhergehenden Ansprüche,
**dadurch gekennzeichnet,**
**dass** das Ventilgehäuse (4) Längsnuten (45) aufweist, welche sich von der Druckkammer (42) in Richtung eines Ventilkopfs (36) des Ventilelements (5) erstrecken.

13. Vorrichtung (1) nach wenigstens einem der vorhergehenden Ansprüche,
**dadurch gekennzeichnet,**
**dass** ein Ventilkopf (36) eines Ventilelement (5) eine konische Dichtfläche und ausflussseitig einen annähernd zylindrischen Bereich (39) aufweist und ein entsprechend geformter Ventilsitz (37) vorgesehen ist.

14. Vorrichtung (1) nach wenigstens einem der vorhergehenden Ansprüche,
**dadurch gekennzeichnet,**
**dass** ein Ventilelement (5) ein einen Ventilkopf (36) aufweisendes Mittelstück (27) und einen Randbereich (28) aufweist, wobei die axiale Lage des Mittelstücks (27) gegenüber dem Randbereich (28) durch ein Stellmittel (30) einstellbar ist.

15. Vorrichtung nach wenigstens einem der Ansprüche 1 bis 13,
**dadurch gekennzeichnet,**
**dass** das Ventilelement (5) einstückig ausgebildet ist.

16. Vorrichtung (1) nach wenigstens einem der vorhergehenden Ansprüche,
**dadurch gekennzeichnet,**
**dass** ein Ventilelement (5) einen Absatz (33) aufweist, welcher in einem die axiale Bewegung des Ventilelements (5) begrenzenden Bewegungsraum (34) in dem Ventilgehäuse (4) bewegbar ist.

17. Vorrichtung (1) nach wenigstens einem der vorhergehenden Ansprüche,
**dadurch gekennzeichnet,**
**dass** zwischen dem Ventil (2) und einem das Ventil aufnehmenden Element (9) des Explosionsumformwerkzeugs (8) eine Dichtung (56) aus einem funkenarmen Werkstoff vorgesehen ist.

18. Vorrichtung (1) nach wenigstens einem der vorhergehenden Ansprüche,
**dadurch gekennzeichnet,**
**dass** ein Ventilelement (5) einen funkenarmen Werkstoff aufweist.

## Claims

1. Device (1) for supplying fluid for explosive forming, which device has a valve (2) and an actuating mechanism (3) for actuating the valve (2),
**characterised in that**
the actuating mechanism (3) in a non-actuated valve state is largely mechanically uncoupled from the valve (2).

2. Device (1) according to claim 1,
**characterised in that**
the actuating mechanism (3) in a non-actuated valve state is spaced apart from the valve (2), in particular such that the distance between the actuating mechanism (3) and the valve (2) is 2 to 7 mm, preferably 3 to 6 mm and in preferably 4 to 5 mm.

3. Device (1) according to at least one of the preceding claims,
**characterised in that**
the actuating mechanism (3) is arranged more or less in series with and downstream of the valve (2).

4. Device (1) according to at least one of the preceding claims,
**characterised in that**
the actuating mechanism (3) is kept in a rest position (61) by an elastic element (17), the valve (2) being in a non-actuated state in said rest position.

5. Device (1) according to at least one of the preceding claims,
**characterised in that**
the actuating mechanism (3) can be brought into a working position (62) by means of electric energy or by pressurisation by means of a fluid, the valve (2) being in an actuated state in said working position.

6. Device (1) according to at least one of the preceding claims,
**characterised in that**
the valve (2) comprises a pressure chamber (42) which can be filled with fluid and which has at least two fluid ports (50, 51).

7. Device (1) according to at least one of the preceding claims,
**characterised in that**
the pressure chamber (42) has a further port (52), via which a fluid and/or a measuring instrument, in particular a pressure measuring instrument, can be introduced into the pressure chamber (42).

8. Device (1) according to at least one of the preceding claims,
**characterised in that**
a valve housing (4) of the valve (2) is composed of multiple parts.

9. Device (1) according to at least one of the preceding claims,
**characterised in that**
a valve seat (37) provided in the valve housing (4) is provided in a separate segment (4a) of the valve housing (4).

10. Device (1) according to at least one of the preceding claims,
**characterised in that**
when the fluid is supplied, a valve element (5) is partially surrounded by the fluid at least in some regions during the fluid supply.

11. Device (1) according to at least one of the preceding claims,
**characterised in that**
a valve element (5) comprises longitudinal grooves (45) which extend from the pressure chamber (42) in the direction of a valve head (36) of the valve tappet (5).

12. Device (1) according to at least one of the preceding claims,
**characterised in that**
the valve housing (4) comprises longitudinal grooves (45) which extend from the pressure chamber (42) in the direction of a valve head (36) of the valve element (5).

13. Device (1) according to at least one of the preceding claims,
**characterised in that**
a valve head (36) of a valve element (5) comprises a conical sealing face and an approximately cylindrical region (39) on the outflow side, and a correspondingly shaped valve seat (37) is provided.

14. Device (1) according to at least one of the preceding claims,
**characterised in that**
a valve element (5) comprises a central piece (27), which has a valve head (36), and an edge region (28), wherein the axial position of the central piece (27) relative to the edge region (28) can be adjusted by an adjusting means (30).

15. Device according to one of claims 1 to 13,
**characterised in that**
the valve element (5) is formed in one piece.

16. Device (1) according to at least one of the preceding claims,
**characterised in that**
a valve element (5) comprises a shoulder (33) which is movable in the valve housing (4) in a movement space (34) that delimits the axial movement of the valve element (5).

17. Device (1) according to at least one of the preceding claims,
**characterised in that**
a seal (56) made from a non-sparking material is provided between the valve (2) and an element (9) of the explosive forming die (8) which accommodates the valve.

18. Device (1) according to at least one of the preceding claims,
**characterised in that**
a valve element (5) comprises a non-sparking material.

## Revendications

1. Dispositif (1) pour l'amenée de fluide pour le formage par explosion, qui comporte une soupape (2) et un mécanisme d'actionnement (3) pour actionner celle-ci,
**caractérisé en ce que** le mécanisme d'actionnement (3) est prévu en étant en grande partie désaccouplé mécaniquement de la soupape (2), dans une position non actionnée de celle-ci.

2. Dispositif (1) selon la revendication 1, **caractérisé en ce que** le mécanisme d'actionnement (3), dans une position non actionnée de la soupape (2), est espacé de celle-ci, en particulier **en ce que** la distance entre le mécanisme d'actionnement (3) et la soupape (2) est de 2 à 7 mm, de préférence de 3 à 6 mm et en particulier de 4 à 5 mm.

3. Dispositif (1) selon l'une au moins des revendications précédentes, **caractérisé en ce que** le mécanisme d'actionnement (3) est disposé en aval de la soupape (2), à peu près en ligne.

4. Dispositif (1) selon l'une au moins des revendications précédentes, **caractérisé en ce que** le mécanisme d'actionnement (3) est maintenu par un élément élastique (17) dans une position de repos (61) dans laquelle la soupape (2) se trouve dans une position non actionnée.

5. Dispositif (1) selon l'une au moins des revendications précédentes, **caractérisé en ce que** le dispositif d'actionnement (3) est apte à être amené à l'aide d'énergie électrique ou d'une contrainte de pression avec un fluide dans une position de travail (62) dans laquelle la soupape (2) se trouve dans une position actionnée.

6. Dispositif (1) selon l'une au moins des revendications précédentes, **caractérisé en ce que** la soupape (2) comporte une chambre de pression (42), apte à être remplie de fluide, avec au moins deux raccords de fluide (50, 51).

7. Dispositif (1) selon l'une au moins des revendications précédentes, **caractérisé en ce que** la chambre de pression (42) comporte un raccord supplémentaire (52) par lequel un fluide et/ou un instrument de mesure, en particulier un manomètre, peuvent être introduits dans la chambre de pression (42).

8. Dispositif (1) selon l'une au moins des revendications précédentes, **caractérisé en ce qu'**une enveloppe de soupape (4) de la soupape (2) est en plusieurs parties.

9. Dispositif (1) selon l'une au moins des revendications précédentes, **caractérisé en ce qu'**un siège de soupape (37) prévu dans l'enveloppe de soupape (4) est prévu dans un segment séparé (4a) de ladite enveloppe de soupape (4).

10. Dispositif (1) selon l'une au moins des revendications précédentes, **caractérisé en ce qu'**un élément de soupape (5), lors de l'amenée du fluide, est entouré, au moins par zones, par le courant de fluide.

11. Dispositif (1) selon l'une au moins des revendications précédentes, **caractérisé en ce qu'**un élément de soupape (5) présente des rainures longitudinales (45) qui s'étendent à partir de la chambre de pression (42) en direction d'une tête de soupape (36) du poussoir de soupape (5).

12. Dispositif (1) selon l'une au moins des revendications précédentes, **caractérisé en ce que** l'enveloppe de soupape (4) présente des rainures longitudinales (45) qui s'étendent à partir de la chambre de pression (42) en direction d'une tête de soupape (36) de l'élément de soupape (5).

13. Dispositif (1) selon l'une au moins des revendications précédentes, **caractérisé en ce qu'**une tête de soupape (36) d'un élément de soupape (5) présente une surface d'étanchéité conique et, côté sortie, une zone (39) approximativement cylindrique, et il est prévu un siège de soupape (37) de forme correspondante.

14. Dispositif (1) selon l'une au moins des revendications précédentes, **caractérisé en ce qu'**un élément de soupape (5) comporte une pièce centrale (27) pourvue d'une tête de soupape (36), et une zone de bord (28), la position axiale de la pièce centrale (27) étant réglable par rapport à la zone de bord (28) grâce à un élément de réglage (30).

15. Dispositif (1) selon l'une au moins des revendications 1 à 13, **caractérisé en ce que** l'élément de soupape (5) est formé d'une seule pièce.

16. Dispositif (1) selon l'une au moins des revendications précédentes, **caractérisé en ce qu'**un élément de soupape (5) présente un épaulement (33) qui est mobile dans l'enveloppe de soupape (4), dans un espace de déplacement (34) qui limite le mouvement axial dudit élément de soupape (5).

17. Dispositif (1) selon l'une au moins des revendications précédentes, **caractérisé en ce qu'**il est prévu, entre la soupape (2) et un élément (9) de l'outil de formage par explosion (8) qui reçoit la soupape, un joint d'étanchéité (56) en matériau anti-étincelles.

18. Dispositif (1) selon l'une au moins des revendications précédentes, **caractérisé en ce qu'**un élément de soupape (5) comporte un matériau anti-étincelles.
